# EUROPÄISCHE PATENTSCHRIFT

(11) **EP 2 219 905 B1**
(45) Veröffentlichungstag und Bekanntmachung des Hinweises auf die Patenterteilung: **15.06.2011**
(21) Anmeldenummer: 08860878.1
(22) Anmeldetag: 04.12.2008
(51) Int. Cl.: B60R 21/13

(54) **REVERSIERBARES ENTRIEGELUNGSSYSTEM EINER SICHERHEITSVORRICHTUNG IN KRAFTFAHRZEUGEN**
REVERSIBLE UNLOCKING SYSTEM OF A SAFETY DEVICE IN MOTOR VEHICLES
SYSTÈME DE DÉVERROUILLAGE RÉVERSIBLE D'UN DISPOSITIF DE SÉCURITÉ DANS DES VÉHICULES À MOTEUR

(30) Priorität: 14.12.2007 DE 102007060978; 01.08.2008 DE 102008035865
(43) Veröffentlichungstag der Anmeldung: 25.08.2010
(73) Patentinhaber: Thomas Magnete GmbH, 57557 Herdorf (DE)
(72) Erfinder: ERMERT, Markus, 57299 Burbach (DE); STOCKSCHLÄDER, Michael, 57562 Herdorf (DE); GROHN, Ralf, 58540 Meinerzhagen (DE); SCHONLAU, Jürgen, 65396 Walluf (DE)
(86) Internationale Anmeldenummer: PCT/EP2008/010262
(87) Internationale Veröffentlichungsnummer: WO 2009/077083

(56) Entgegenhaltungen:
- WO-A-2004/103780
- DE-A1- 10 215 054
- DE-A1- 10 345 689
- DE-U1- 20 304 945

## Beschreibung

Die Erfindung betrifft ein reversierbares Entriegelungssystem für die Auslösung einer Sicherheitsvorrichtung in Kraftfahrzeugen mit einem Gehäuse, umfassend einen mittels eines Kraftspeichers vorgespannten Aktor, der im Aktivierungsfall ein im Verriegelungszustand in Selbsthaltung angeordnetes Betätigungselement eines Kraftspeichers aktiviert, wobei durch eine Hubbewegung des Betätigungselementes über ein Übersetzungsgetriebe eine Sperrklinke aus ihrer Sperrposition in eine Auslöseposition bewegbar ist und durch die Bewegung der Sperrklinke ein Halteglied der Sicherheitsvorrichtung aus der Verriegelungsstellung gelöst und freigegeben wird, wobei ferner nach erfolgter Entriegelung die Reversierung der Entriegelungsvorrichtung in die Verriegelungsstellung ermöglicht ist, indem das Betätigungselement gegen die Kraft des Kraftspeichers in seine gespannte Position verstellt wird und die Sperrklinke mit dem Halteglied in die Verriegelungsstellung verlagert wird, wobei der Aktor einen Permanentmagneten, als Betätigungselement eine mit diesem zusammenwirkende Haftplatte und einen schaltbaren Elektromagneten aufweist, wobei der Permanentmagnet das Entriegelungssystem bei unbestromtem Elektromagneten in der Verriegelungsstellung hält, und der Elektromagnet so ausgelegt ist, dass bei bestromtem Elektromagneten das Magnetfeld des Permanentmagneten so abgeschwächt ist, dass die Haftplatte mittels des Kraftspeichers in eine Lage verstellbar ist in der die Sicherheitsvorrichtung entriegelt ist.

Solche Sicherheitssysteme in Kraftfahrzeugen sind beispielsweise Überrollbügel in Cabriolets, crashaktive Kopfstützen, Sicherheitsgurte, anhebbare Karosserieteile für den aktiven Fußgängerschutz und/oder weitere Anwendungen.

Das Entriegelungssystem umfasst einen mittels eines Kraftspeichers vorgespannten Aktor, der im Aktivierungsfall einen im Verriegelungsfall in Selbsthaltung angeordneten Stößel, beispielsweise in Form einer Haftplatte eines Kraftspeichers aktiviert. Durch eine kurze Hubbewegung des Stößels oder eines anderen Betätigungselementes wird über ein Untersetzungsgetriebe, beispielsweise in Form von mehreren zwischengeschalteten Klinken und Hebeln, eine Sperrklinke aus ihrer Sperrposition in eine Auslöseposition bewegt. Mit der Bewegung der Sperrklinke wird ein Halteglied in Form einer Haltestange oder einem Auslösebolzen des Sicherheitssystems aus der Verriegelungs- in die Auslösestellung gebracht. Nach der erfolgten Auslösung oder Betätigung erfolgt die Reversierung des Entriegelungssystems in seine Verriegelungsstellung. Hierzu muss das Betätigungselement, beispielsweise manuell, gegen die Federkraft in seine gespannte Position zurückgeschoben werden. Zusätzlich muss die Sperrklinke mit dem Halteglied wieder in die Verriegelungsstellung gebracht werden.

Entriegelungssysteme mit mehreren Klinken zur Untersetzung der Kraft und einem Elektromagneten haben einen gewissen Energiebedarf. Ein Großteil dieser Energie wird bei der Hubarbeit des Betätigungselementes verbraucht. Daher haben elektromagnetische Systeme mit klassischen Hubmagneten einen relativ hohen Energiebedarf, der bereitgestellt werden muss. Diese Bereitstellung kostet eine nicht unerhebliche Summe, da ein zusätzliches Steuergerät die Energie vorhält beziehungsweise schalten muss. Aktoren von Entriegelungssystemen umfassen daher einen Permanentmagneten und einen Elektromagneten in Form eines schaltbaren Haftmagneten, wobei der Permanentmagnet das Entriegelungssystem bei unbestromten Elektromagneten in der Verriegelungsstellung hält und der Elektromagnet so ausgelegt ist, dass bei geeigneter Strombeaufschlagung das Magnetfeld des Permanentmagneten so abgeschwächt wird, dass der Stößel beziehungsweise die Haftplatte des Magneten bewegt wird, damit das Entriegelungssystem aktiviert wird. Ein solcher Aktor zum Auslösen eines Entriegelungssystems ist beispielsweise aus der gattungsgemässen DE 103 45 689 A1 bekannt.

Die Verwendung eines schaltbaren Selbsthaltehaftmagneten als Aktor erfordert einige Änderungen an der Kinematik des Entriegelungssystems, da ein solcher Magnet im geöffneten Zustand offen bleibt und er von keiner inneren oder äußeren Federkraft zurückgestellt wird. Außerdem ist die innere Feder, die den Stößel oder die Haftplatte beaufschlägt, so stark, wie ansonsten ein bestromter Schaltmagnet. Die Vorteile der starken Untersetzung, den ein Mehrklinkensystem mit sich bringt, ist bei der Reversierung eines geöffneten schaltbaren Selbsthaltehaftmagneten ein Nachteil, da nun, ohne Änderung der Kinematik, eine wesentlich höhere Kraft zur Reversierung erforderlich ist als die Kraft bei der Entriegelung. Um die Reversierung der Klinken, das Spannen und Anhalten zu ermöglichen, wird der Reversiervorgang durch ein Drücken entgegen der Auslösekraft auf eine Klinkenfeder erreicht. Die Getriebeklinken werden durch das Drücken in ihre Ausgangsposition gedrückt, so dass damit ein Kraftspeicher in Form der Haftplatte oder des Stößels wieder in die gespannte Position gebracht wird. Hierzu wird beispielsweise auf die DE 102 15 054 A1 verwiesen.

Aufgabe der Erfindung ist es, bei einem reversierbaren Entriegelungssystem gattungsgemäßer Art mit einem federvorgespannten, schaltbaren Selbsthaltehaftmagneten als Aktor ein Spannen des Kraftspeichers zu erreichen, wobei weniger Kraft und Energie benötigt wird als bei herkömmlichen Systemen. Zur Lösung der Aufgabe wird vorgeschlagen, dass das Spannen des Kraftspeichers während des Entriegelungsvorganges erfolgt. Vorteilhafte Weiterbildungen sind in den Unteransprüchen 2 bis 12 angegeben.

Durch die erfindungsgemäße Lösung wird erreicht, dass sobald das System entriegelt ist, während der Entriegelungsbewegung der Getriebeglieder der Kraftspeicher in Form eines Stößels oder einer Haftplatte wieder gespannt wird. Das Spannen erfolgt unabhängig und außerdem noch vor dem Reversiervorgang des Entriegelungssystems.

Realisiert wird das vorzeitige Spannen des Kraftspeichers vorzugsweise dadurch, dass mindestens ein Element des Mehrklinkensystems ein zusätzliches vorzugsweise federndes Element aufweist, das beim Bewegen der Sperrklinke von der Öffnungs- in die Schließposition entgegen der Öffnungsrichtung in Spannrichtung des Kraftspeichers bewegt wird, so dass der Stößel oder die Haftplatte in die Spannposition zurückbewegt wird. Dabei weist das gegebenenfalls federelastische Element eine größere Federkraft auf als der zu spannende Kraftspeicher des Entriegelungssystems. Das zusätzliche Teil, welches hierzu erforderlich ist, kann ein Federelement sein oder auch ein starres Element, welches gegebenenfalls federnde Teile aufweist, wie federnde Finger oder dergleichen. Insbesondere muss das federelastische Element, gebildet durch das zusätzliche Teil, so in den Kraftfluss des Entriegelungsvorganges eingebunden sein, dass es den Überdruck beim Auslösen kompensiert. Durch den sich ändernden Angriffswinkel in der von dem zusätzlichen Teil betätigten Komponente ist das Federelement in der Lage bei einer definierten Kraft auszulenken, nachdem der Kraftspeicher wieder gespannt ist, um somit auch dem nachfolgenden Reversiervorgang des Entriegelungssystems zu ermöglichen.

Eine vorteilhafte Ausführung der Erfindung umfasst als Untersetzungsgetriebe ein Dreiklinkenhebelsystem mit einer Betätigungsklinke, an deren einem Ende der Stößel oder die Haftplatte angreift und dessen anderes Hebelende einen ebenfalls schwenkbaren Zwischenhebel bewegt, der in Verbindung mit der Sperrklinke steht. Die Sperrklinke ist dabei vorteilhaft in der Lagermitte der Betätigungsklinke angeordnet. Das Schalten des federvorgespannten Kraftspeichers erfolgt durch eine Schwenkbewegung der Betätigungsklinke durch die das Sicherheitssystem ausgelöst wird. Die Betätigungsklinke bewegt die Haftplatte oder den Stößel gegen die Kraft des Federspeichers des Magneten, so dass die Haftplatte zur Haftung gelangt oder ein Stößel in seinen vorgespannten Zustand kommt.

In einer weiteren vorteilhaften Ausgestaltung der Erfindung ist vorgesehen, dass das federbehaftete Element als Teil der Betätigungsklinke ausgeführt ist. Dieses zusätzliche Hebelelement wird durch die Drehbewegung der Sperrklinke berührt und bewegt sich somit in Spannrichtung des Kraftspeichers.

In einer weiteren vorteilhaften Ausführung weisen die Sperrklinke und die Zwischenklinke jeweils ineinander greifende Nasen oder Vorsprünge auf. Diese sorgen für das weitere Drehen der Klinken mit einem höheren Drehmoment während der Auslösebewegung der Sperrklinke. Bei entsprechenden Entriegelungssystemen erfolgt das Auslösen meist in Verbindung mit einem pyrotechnischen System, wie zum Beispiel einem Airbag in einem zentralen Steuergerät (ECU) im Kraftfahrzeug. Zur Gewährleistung der Funktionsfähigkeit müssen diese Sicherheitseinrichtungen regelmäßig auch im eingebauten Zustand gewartet werden.

Somit sollte auch der elektromagnetische Aktor eine Serviceentriegelung ermöglichen, mit der Fehler oder Fehlauslösungen bei Inspektionen getestet werden können. Hierzu sind elektromagnetische Verriegelungssysteme mit einer oder mehreren Klinken jedoch nur dann in der Lage, wenn diese Funktion in der ECU implementiert ist. Bei einer direkten Anbindung an ein Airbag- ECU ist eine Serviceentriegelung nicht möglich. Diese Funktion ist für pyrotechnische Systeme nicht sinnvoll und wird somit auch in der ECU nicht vorgehalten. Um die Auslösung des Entriegelungssystems zu testen, müsste die elektrische Verbindung zur ECU getrennt werden, was zu einer aufwändigen Fehlersuche und dessen Beseitigung führt. Demzufolge ist es eine weitere Aufgabe der Erfindung, eine mechanische Serviceentriegelung einer Verriegelungseinheit vorzuschlagen, die bei Beibehalt der elektrischen Verbindung zu einer ECU als Stellglied einen Aktor aufweist, der einen federvorgespannten schaltbaren, selbsthaltenden Haftmagneten umfasst. Die Lösung dieser Aufgabe ist im Anspruch 13 angegeben. Vorteilhafte Weiterbildungen sind in den Ansprüchen 14 bis 16 angegeben.

Durch diese Ausbildung ist es möglich, die Betätigungsklinke des Aktors mittels eines Stiftes zu betätigen, der durch die Durchgriffslochung beispielsweise in Form einer Bohrung des Gehäuses zur Betätigungsklinke geführt wird. Je nach dem wo der Stift angreift, kann die Betätigungsklinke nach oben (in die Entriegelungslage) oder nach unten (in die Verriegelungslage) gedrückt werden. Dies simuliert die gleiche Funktion innerhalb des Entriegelungssystems wie eine Betätigung der Klinke durch den Elektromagneten.

Die Betätigungsklinke ist dabei vorzugsweise als Wippe ausgeführt, an deren beiden Hebelarmen jeweils der Kraftangriff erfolgt. Ein Kraftangriff oberhalb der Klinke hat zur Folge, dass diese nach unten gedrückt wird, das System also ausgelöst wird. Bei einem Kraftangriff unterhalb der Klinke wird die Klinke nach oben gedrückt und das System wieder gespannt. Die beiden Kraftangriffspunkte werden durch die Bohrungen im Gehäuse des Aktors erkennbar gemacht, so dass der entsprechend befugte Benutzer ein entsprechendes Werkzeug in die Bohrung einführen kann. Es sind damit die entsprechenden Angriffspunkte ohne Demontage des Gehäuses von außen mit einem entsprechenden Werkzeug erreichbar. Es wird hiermit eine mechanische Serviceentriegelung einer Verriegelungseinrichtung geschaffen, die direkt beispielsweise an einer Airbag-ECU angeschlossen werden kann. Die Erfindung sowie weitere Ausführungen der Erfindung ergeben sich aus den im Folgenden dargestellten Ausführungsbeispielen der Erfindung.
Fig. 1a bis 1e zeigt eine erste Ausführungsform der Erfindung von der Grundstellung bis zur Entriegelungsstellung des Entriegelungssystems.
Fig. 2a bis 2d zeigen die erste Ausführungsform bei der Reversierung des Entriegelungssystems bis zurück in die Grundstellung.
Fig. 3a bis 3d zeigt eine zweite Ausführung der Erfindung von der Grundstellung bis zur Entriegelungsstellung.
Fig. 4a bis 4c zeigen den Reversiervorgang der Ausführungsform gemäß Fig. 3a bis 3d.
Fig. 5a bis 5d zeigt eine dritte Ausführungsform der Erfindung von der Grundstellung bis zur Entriegelungsstellung.
Fig. 6a bis 6c zeigt die dritte Ausführungsform beim Reversiervorgang in die Grundstellung.
Fig.7a und 7b zeigen Querschnittsdarstellungen von zwei Varianten eines als Aktor für ein Entriegelungssystem verwendeten Elektromagneten.
Fig. 8 zeigt eine Draufsicht auf die Ausführungsform nach Fig. 7a und Fig. 7b.
Fig. 9 zeigt eine Einzeldarstellung der Ausführungsform nach Fig. 3a bis 3d und Fig. 4a bis 4d.
Fig. 10 zeigt eine Einzeldarstellung der Ausführungsform nach Fig. 5a bis 5d und Fig. 6a bis 6c.
Fig. 11 zeigt eine Einzeldarstellung der Ausführungsform nach Fig. 1a bis 1e und Fig. 2a bis 2d.
Fig. 12 zeigt eine weitere Ausführungsform in Schnittdarstellung.
Fig. 13 zeigt die Ausführungsform in Ansicht.

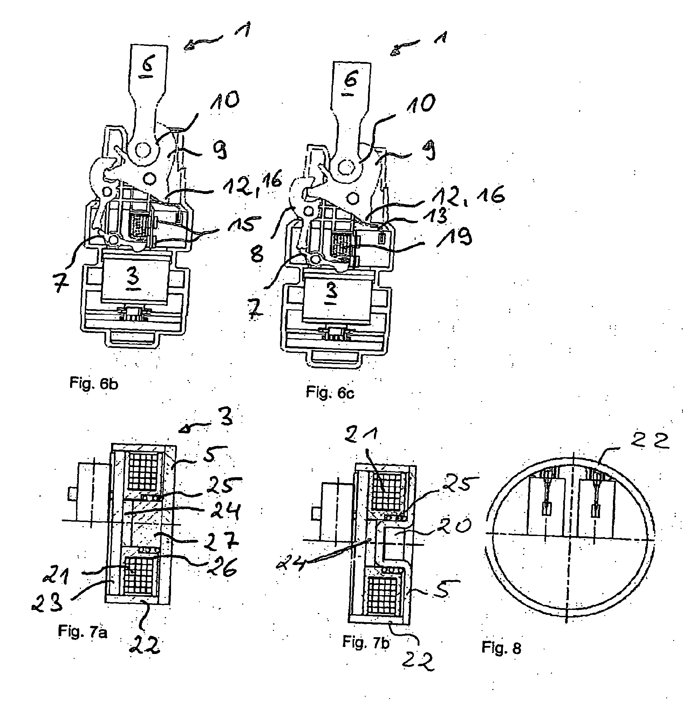

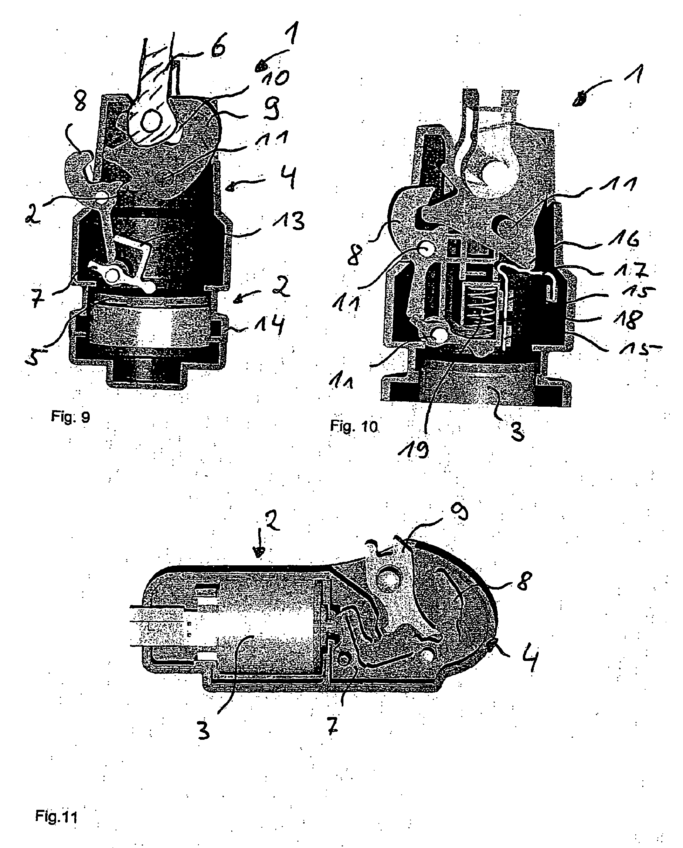

Fig. 9 und Fig. 10 zeigen in einer Gesamtdarstellung ein Entriegelungssystem 1 in zwei Ausführungsformen, die als Auslöseeinrichtung für einen Überrollbügel eines Cabrio Pkw einsetzbar sind. Beide Varianten weisen im Wesentlichen drei Funktionsbereiche auf, einen Aktor 2 in Form eines Haftmagneten 3, der ebenfalls in zwei Varianten in Figur 7a, 7b und Figur 8 dargestellt ist und später noch ausführlich beschrieben wird, ferner ein als mechanisches Untersetzungsgetriebe 4 ausgeführtes Klinkensystem, mit dem der Kraftfluss von einem Betätigungselement in Form einer Haftplatte 5 des Haftmagneten 3 auf ein Halteglied 6 des Überrollbügels übertragen wird.

Das Getriebe 4 der Fig. 9 und Fig. 10 umfasst ein Dreiklinkenhebelsystem zum Kraftfluss mit einer als Hebel ausgestatteten Betätigungsklinke 7, einem Zwischenhebel und einer Sperrklinke 9, die eine Öffnung 10 für das Halteglied 5 des Überrollbügels aufweist. Die drei Klinken 7, 8, 9 weisen jeweils Lagerstellen 11 auf, die in einem bestimmten Winkel zueinander versetzt sind, um einen optimalen Kraftfluss zur Erzeugung eines hohen Drehmomentes an der Sperrklinke 9 sicherzustellen. Die Sperrklinke 9 und der Zwischenhebel 8 weisen zusätzlich ineinander greifende Nasen 12 oder auch Noppen 16 auf, die für das weitere Drehen der Klinken mit einem höheren Drehmoment sorgen.

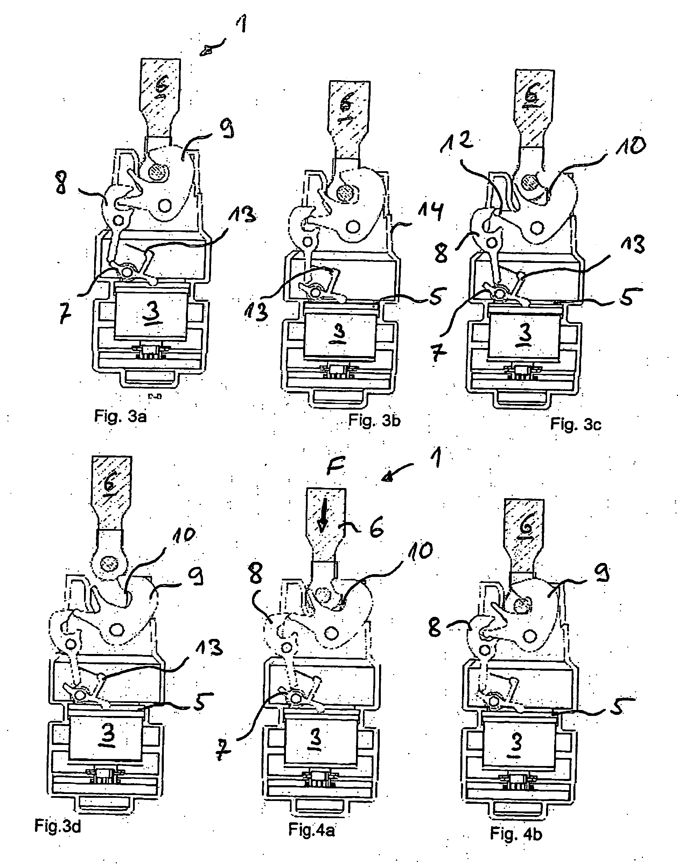

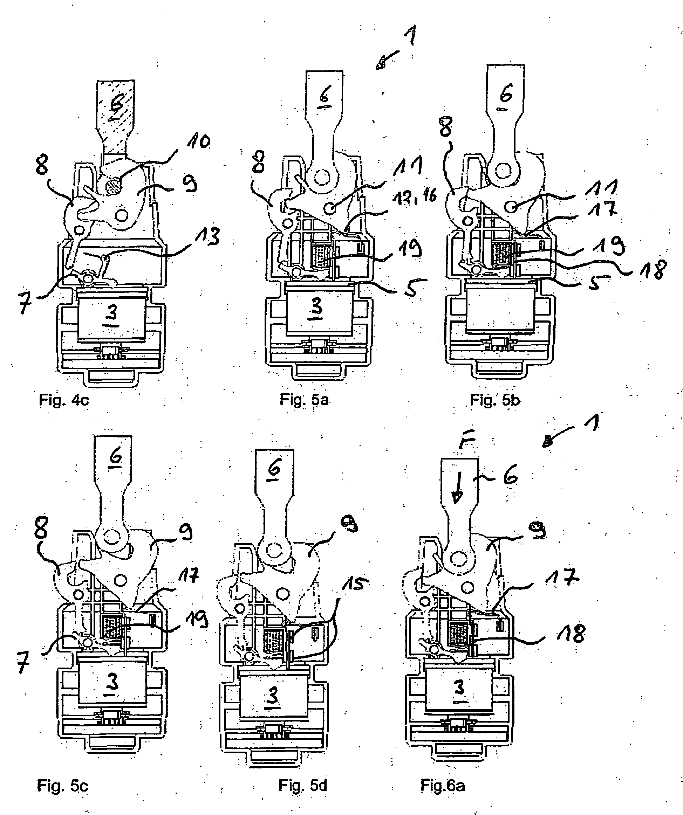

Kinematisch bedingt erfolgt das Spannen des Haftmagneten 3 durch Überdrückung. Der Spannvorgang erfolgt noch während des Auslösevorganges, wie dies aus den Fig. 3a bis 3d für die Ausführung nach Fig. 9, und aus den Fig. 5a bis 5d für die Ausführung nach Fig. 10 ersichtlich ist.

Der Spannvorgang wird durch ein zusätzliches Teil 13, insbesondere Federelement realisiert, das in der Ausführung nach Fig. 9 als eingespritztes Federblech in der Betätigungsklinke 7 ausgeführt ist und auf den Zwischenhebel 8 wirkt. Das Federelement ist so ausgeführt, dass es ein weiteres Drehen der Klinken auch für den später ablaufenden Reversiervorgang nicht behindert. Durch den sich ändernden Angriffswinkel ist das Federelement in der Lage bei einer definierten Kraft auszulenken, nachdem die Haftplatte 5 des Magneten 3 wieder angehaftet hat.

Im weiteren Verlauf der Figurenbeschreibung werden gleiche Funktionsteile unterschiedlicher Ausführungen der Erfindung mit dem gleichen Bezugszeichen versehen.

Das zusätzliche Teil 13, insbesondere ein Federelement, ist in der Ausführung nach Figur 10 als winkelförmiges Federblech ausgeführt, dessen waagerechter Schenkel 17 mit der Sperrklinke 9 zusammenwirkt und seitlich am Gehäuse 14 fest eingespannt ist und nicht Teil des Klinkensystems ist. Der senkrechte Schenkel 18 ist in axialer Richtung lose verschiebbar in zwei Führungen 15 geführt. Ein Nocken 16 der Sperrklinke 9 drückt auf den waagerechten Schenkel 17. Das senkrechte Ende des senkrechten Schenkels 18 wird dadurch auf die Haftplatte 5 des Magneten 3 gedrückt. Die Betätigungsklinke 7 wirkt nur für die Übertragung des Kraftflusses für den Öffnungsvorgang und dem Reversiervorgang. Für den Spannvorgang während des Öffnens hat sie keine Funktion. Die Betätigungsklinke 7 wird durch die Schraubenfeder 19 gegen die Haftplatte 5 des Magneten 3 gedrückt. Sie sorgt zusätzlich dafür, dass bei Erschütterungen des Systems keine Fehlauslösungen stattfinden.

Fig. 11 zeigt in einer Gesamtdarstellung die Ausführungsform des Entriegelungssystems 1 für die Anwendung als "aktive" Kopfstütze, die im Crashfall in Richtung eines zurückgeschnellten Kopfes einer im Kfz sitzenden Person auslöst. Das Getriebe 4 weist, ähnlich wie bei der Darstellung der Fig. 9 und 10, ein Dreiklinkensystem mit einer Betätigungsklinke 7, einem Zwischenhebel 8 und einer Sperrklinke 9 auf. Der Aktor 2 für die Betätigung des Sicherheitssystem 1 ist ebenfalls als Haftmagnet 3 mit einer Haftplatte 5 ausgeführt.

Die Betätigungsklinke 7 weist an ihrem einen Ende ein in Richtung der Längsachse der Klinke 7 gebogene und federnde Verlängerung auf, das ein zusätzliches Teil 13, insbesondere ein federndes Element bildet. Das Ende des federnden Elementes wirkt mit dem Zwischenhebel 8 zusammen. Durch diese Anordnung wird einerseits der weitere Öffnungsvorgang ausgeglichen, zum anderen wird damit die Klinke 7 beim späteren Reversiervorgang gegen die Haftplatte 5 des Magneten 3 gedrückt.

Wie schon erwähnt ist der Aktor 2 des Entriegelungssystems 1 als Haftmagnet 3 ausgeführt. Die Fig. 7a und 7b zeigen als Schnittdarstellung zwei Varianten des Haftmagneten 3. Die Fig. 8 zeigt eine Draufsicht, die für beide Varianten gilt.

Die Ausführungsform nach Fig. 7a zeigt den Haftmagneten 3 in der Variante mit einer durchgehenden Haftplatte 5. In der Ausführungsform nach Fig. 7b ist die Platte 5 tiefgezogen. In der Vertiefung 20 kann ein nicht dargestellter Stößel geführt werden, der beim Auslösen auf die Betätigungsklinke 7 wirkt. Bei der durchgehenden Haftplatte nach Fig. 7a wirkt die Platte direkt auf die Betätigungsklinke 7. Der Magnet 3 ist in einem rohrförmigen Gehäuse 22 gelagert und weit eine Spule 21 zur Bestromung des Magneten auf. Die Funktion eines Hubankers übernimmt in beiden Ausführungsformen die axial verstellbare Haftplatte 5, die als axial verstellbarerer Deckel für das rohrförmige Gehäuse 22 wirkt. Das andere Ende des rohrförmigen Magneten 3 bildet eine Jochscheibe 23, die auf Maß an das rohrförmige Gehäuse 22 eingepresst ist.

Dem Magnetfeld des Elektromagneten wirkt ein zusätzliches Magnetfeld eines Permanentmagneten 24 entgegen. Dieser ist zwischen der Jochscheibe 23 und der Haftplatte 5 angeordnet. Bei Stromfluss durch die Spule 21 wirkt das dabei entgegenstehende Magnetfeld dem des Permanentmagneten 24 entgegen. Damit wird im eingeschalteten Zustand das Magnetfeld an der Haftplatte kompensiert, die vorher festgehaltene Haftplatte 5 löst sich und ist in axialer Richtung spielbehaftet. Der Permanentmagnet 24 bewirkt in dem Sicherheitssystem 1 nur die Haltefunktion im Normalzustand. In dieser Position ist der Elektromagnet stromlos. Der Stromfluss des Elektromagneten wirkt nur im Auslösefall. Die Haftplatte 5 hat keinerlei Verbindung (Luftspalt) zum restlichen Teil des Magneten 3. Sie wird geführt durch eine axial angeordnete Druckfelder 25 in Form einer Schraubenfeder, die sich mit ihrem anderen Ende auf einer Abstufung eines Spulenkörpers 26 der Spule 21 abgestützt und radial durch den Spulenkörper 26 geführt ist. Diese Druckfeder bewirkt die Vorspannung der Haftplatte 5 und wird beim Aktivieren des Entriegelungsvorganges schon beim Entriegeln durch ein zusätzliches Teil 13, insbesondere federndes Element wieder gespannt. In der Ausführung mit der tiefgezogenen Haftplatte 5 (Fig. 7b) ist deren Vertiefung 20 von der Druckfeder 25 umgeben. Bei der Ausführung mit der glatten Haftplatte 5 (Fig. 7a) umgibt die Druckfeder 25 ein Kern 27 aus gedrehtem Stahl.

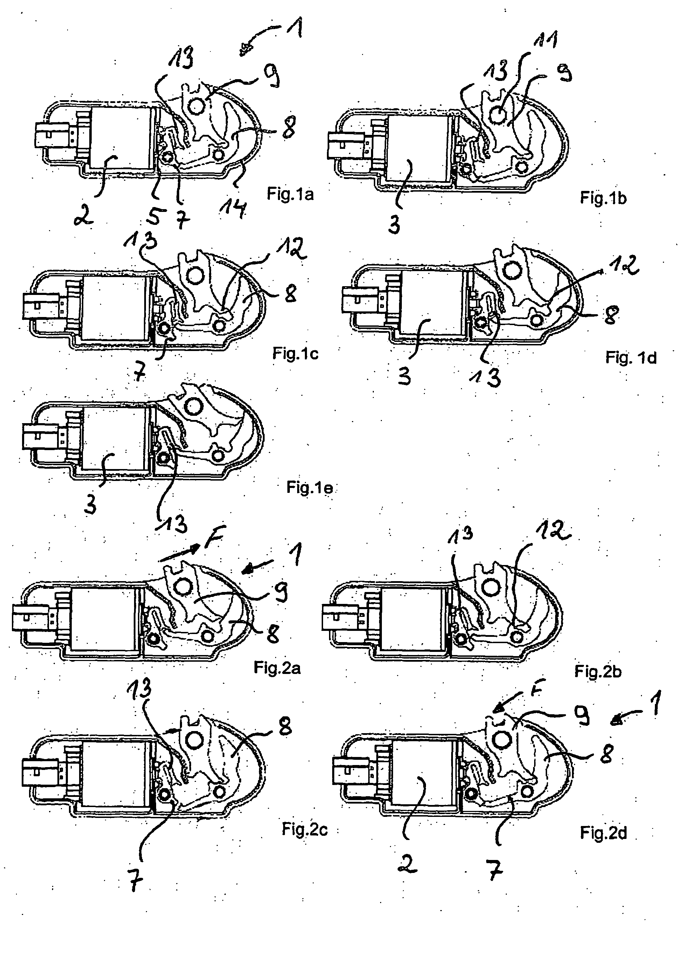

Die Darstellungen der Fig. 1a bis Fig. 1e zeigen die Ausführungsform des Entriegelungssystems 1, das in Fig. 11 als Komplettdarstellung darstellt ist und dessen Aufbau oben hinreichend beschrieben ist.

Fig. 1a zeigt die Grundstellung oder Normalstellung. Der Aktor 2 ist gespannt und bewirkt ein Halten einer Betätigungsstange (nicht dargestellt) in einer Öffnung der Sperrklinke 9. Die Haftplatte 5 wird nur durch den Permanentmagneten 24 (Fig. 7a, 7b) axial festgehalten. Der Kraftschluss zur Sperrklinke 9 erfolgt von der Betätigungsklinke 7 über den Zwischenhebel 8 auf die Sperrklinke 9 ohne das zusätzliche Teil 13, insbesondere das federnde Element. Dieses ist das an dem anderen Ende, das nicht im Eingriff mit dem Zwischenhebel 8 ist, als eine in Richtung der Achse des Betätigungshebels 7 gebogene Verlängerung ausgestaltet.

Fig. 1b zeigt den Start der Entriegelung. Der Spulenstrom im Haftmagneten 3 reduziert die Haftkraft des Permanentmagneten 24 (Fig. 7a, 7b). Die Druckfeder 25 (Fig. 7a, 7b) öffnet die Betätigungsklinke 7. Die Haftplatte 5 wird mit einigem Spiel im Gehäuse 14 geführt. Der Kraftflussübergang zwischen dem Ende der Betätigungsklinke 7 und dem Zwischenhebel 8 wird langsam unterbrochen. Das Ende des Zwischenhebels 8 schwenkt in Richtung des zusätzlichen Teils 13 in Form der federnden Verlängerung der Betätigungsklinke 7, wie dies in Fig. 1c dargestellt ist. Die Sperrklinke weist eine zusätzliche in Richtung des anderen Endes des Zwischenhebels 8 weisende Nase 12 auf, die ein weiteres Drehen der Klinken mit einem höheren Drehmoment ermöglichen (Fig. 1d). Gleichzeitig wird damit das andere in Richtung der Betätigungsklinke 7 weisende Ende des Zwischenhebels 8 gegen das Ende des zusätzlichen Teils 13, insbesondere des federnden Elementes gedrückt, das somit den Spannprozess im Haftmagneten 3 einleitet.

In der Darstellung nach Fig. 1e haftet der Magnet wieder an. Das zusätzliche Teil 13, insbesondere das federnde Element "federt" in diesem Bereich des Betätigungshebels 7 und gleicht den weiteren Öffnungsvorgang aus. In dieser Darstellung ist das System 1 entriegelt und der Magnet 3 gespannt.

Nach dem Entriegelungsvorgang folgt die Reversierung des Entriegelungssystems 1 zurück in den Ausgangszustand gemäß Fig. 1 a. Dieser Vorgang ist in den Darstellungen der Fig. 2a bis 2d dargestellt.

Fig. 2a zeigt den Beginn des Reversierungsvorganges, der durch Überdrücken der Sperrklinke 9 eingeleitet wird, symbolisch dargestellt durch die Pfeilrichtung der Kraft F. In der folgenden Darstellung der Fig.2b wird die Verbindung des zusätzlichen Teils 13, insbesondere der federnden Verlängerung der Betätigungsklinke 7 vom Ende des Zwischenhebels 8 getrennt. Die Betätigungsklinke 7 wird gegen die Haftplatte 5 gedrückt, gleichzeitig wird der Zwischenhebel 8 zurückgestellt.

In der folgenden Darstellung der Fig. 2c hat der Zwischenhebel 8 die Betätigungsklinke 7 überfahren und drückt mit seinem dort angeordneten Ende gegen das andere nicht mit dem federnden Element 13 versehene Ende der Betätigungsklinke 7, wie dies in Fig. 2d dargestellt ist. Die Reversierung hat stattgefunden. Die Kraftwirkung aus dem Sicherheitssystem (dargestellt durch den Kraftpfeil F) wirkt wieder in Arbeitsrichtung wie in Fig. 1a.

Die Darstellungen der Fig. 3a bis 3d zeigen die Ausführungsform des Entriegelungssystems 1, das in Fig. 9 als Komplettdarstellung dargestellt ist und dessen Aufbau oben hinreichend beschrieben ist.

Fig. 3a zeigt das Entriegelungssystem 1 in der Grundstellung. Durch die Sperrklinke 9 wird das Halteglied 6 gehalten. Die Betätigungsklinke 7 weist ein senkrecht zu der Hebellängsachse sich erstreckendes zusätzliches Teil 13, insbesondere federndes Element auf, mit dem beim Öffnungsvorgang des Systems 1 gleichzeitig der Magnet 3 gespannt werden kann.

Der Beginn des Öffnungsvorganges ist in Fig. 3b dargestellt. Durch den Spulenstrom im Elektromagneten 3 wird die Haftkraft des Permanentmagneten reduziert und die Druckfeder 25 (Fig. 7a, 7b) öffnet die Betätigungsklinke 7. Die Haftplatte 5 wird mit einigem Spiel im Gehäuse 14 geführt.

Aus Fig. 3c ist das gleichzeitige Spannen des Elektromagneten 3 während des Öffnungsvorganges des Entriegelungssystems ersichtlich. Das Halteglied 6 öffnet die Sperrklinke 9 weiter auf. Die Nasen 12 an der Sperrklinke 9 und dem Zwischenhebel 8 sorgen für das weitere Drehen der Klinken. Gleichzeitig drückt das zusätzliche Teil 13, insbesondere federnde Element gegen das in Richtung der Betätigungsklinke 7 weisende Ende des Zwischenhebels 8, wodurch gleichzeitig die Betätigungsklinke 7 gegen die Haftplatte 5 gedrückt wird.

In der Darstellung von Fig. 3d haftet die Haftplatte 5 wieder an und die Sperrklinke 9 wird überdrückt. Das Entriegelungssystem 1 ist im geöffneten Zustand.

Der anschließende Reversierungsvorgang der Ausführung nach Fig. 9 ist in den Fig. 4a bis 4c dargestellt. Durch eine äußere Krafteinwirkung F in Richtung der Öffnung 10 der Sperrklinke 9 wird letztere entgegen der Öffnungsrichtung gedreht (Fig. 4b). Der Zwischenhebel 8 wird mit seinem der Betätigungsklinke 7 zugewandten Ende gegen die Betätigungsklinke 7 gedrückt bis das Halteglied 6 in die Öffnung 10 der Sperrklinke 9 fest verrastet ist. Damit ist der Reversiervorgang abgeschlossen (Fig. 4c).

Die Darstellungen der Fig. 5a bis 5d zeigen die Ausführungsform des Entriegelungssystems 1, das in Fig. 10 als Komplettdarstellung dargestellt ist und dessen Aufbau oben hinreichend beschrieben ist. Dargestellt ist wieder die Ausgangssituation (Fig. 6a) bis zum Entriegelungszustand gemäß Fig. 5d.

Aus den Fig. 5c und 5d ist ersichtlich, dass der senkrechte Schenkel 18 des zusätzlichen Teils 13, insbesondere des federnden Elementes während des Öffnungsvorganges auf die Haftplatte 5 drückt und somit den Magneten 3 wieder spannt. Das zusätzliche Teil 13, insbesondere das federnde Element, wirkt mit seinem senkrechten Schenkel 18 wie ein Stift auf die Haftplatte 5 des Magneten 3. Die Sperrklinke 9 wird durch den waagerechten Schenkel 17 des zusätzlichen Teils 13, insbesondere des federnden Elementes gehalten. Das federnde Element wirkt hier zusammen mit der Sperrklinke 9 und nicht wie bei den anderen Ausführungsformen mit Betätigungsklinke 7.

Im anschließenden Reversierungsvorgang, der in den Darstellungen der Fig. 6a bis 6c dargestellt ist, wird durch Krafteinleitung F (Fig. 6a) die Sperrklinke 9 entgegen dem Uhrzeigersinn gedreht, bis der Ausgangszustand gemäß Figur 5a (Beginn des Entriegelungsvorganges) wieder erreicht ist. Der Kraftfluss erfolgt hier analog der schon vorher beschriebenen Ausführungsformen.

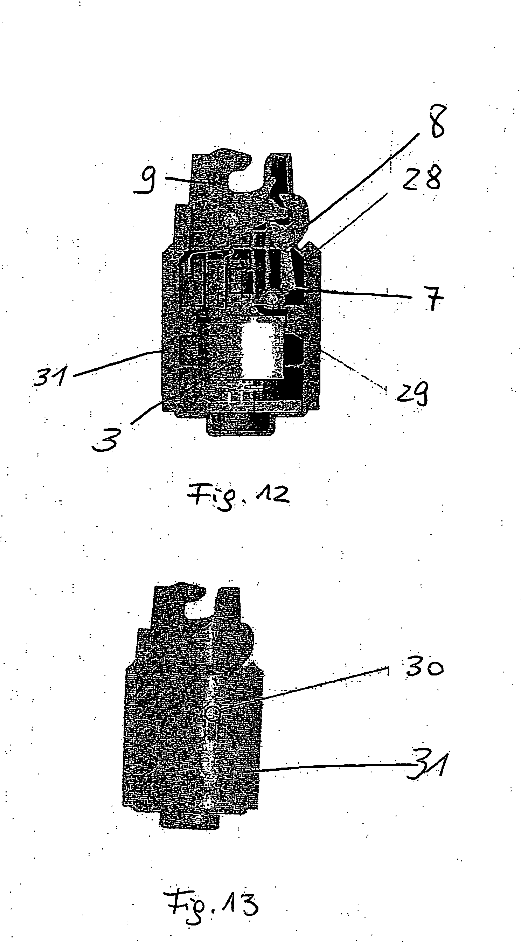

In Fig. 12 und 13 ist eine Einrichtung entsprechend der Ausführungsform nach Fig. 10 gezeigt. Es ist dort das Gehäuse 31 gezeigt, welches die Elemente der Sicherheitsvorrichtung umgibt. Dieses Gehäuse 31 weist mindestens eine Durchgriffslochung 30 für ein Werkzeug, beispielsweise einen Stift auf, die im Bereich der Betätigungsklinke 7 vorgesehen ist, so dass also in diese Durchgriffslochung 30 mit einem Stift oder dergleichen eingegriffen werden kann, um die Betätigungsklinke zu betätigen. Dabei kann durch ein entsprechend in die Lochung 30 eingeführtes Werkzeug die Klinke entweder an dem Kraftangriff 29 unterhalb der Klinke betätigt werden, so dass die Klinke nach oben gedrückt wird und die Vorrichtung entriegelt wird oder aber ein entsprechender Stift kann so eingesetzt werden, dass ein Kraftangriff 28 oberhalb der Klinke erfolgt, so dass die Klinke 7 nach unten in die Sperrlage gedrückt wird. Die entsprechende Zugriffsöffnung ist durch eine einzige Durchgriffslochung 30 gebildet. Es ist aber auch möglich, für jede Eingriffssituation eine separate Durchgriffslochung vorzusehen.

## Patentansprüche

1. Reversierbares Entriegelungssystem für die Auslösung einer Sicherheitsvorrichtung in Kraftfahrzeugen mit einem Gehäuse, umfassend einen mittels eines Kraftspeichers vorgespannten Aktor (2), der im Aktivierungsfall ein im Verriegelungszustand in Selbsthaltung angeordnetes Betätigungselement eines Kraftspeichers aktiviert, wobei durch eine Hubbewegung des Betätigungselementes über ein Übersetzungsgetriebe eine Sperrklinke (9) aus ihrer Sperrposition in eine Auslöseposition bewegbar ist und durch die Bewegung der Sperrklinke (9) ein Halteglied (6) der Sicherheitsvorrichtung aus der Verriegelungsstellung gelöst und freigegeben wird, wobei ferner nach erfolgter Entriegelung die Reversierung der Entriegelungsvorrichtung in die Verriegelungsstellung ermöglicht ist, indem das Betätigungselement gegen die Kraft des Kraftspeichers in seine gespannte Position verstellt wird und die Sperrklinke (9) mit dem Halteglied (6) in die Verriegelungsstellung verlagert wird, wobei der Aktor (2) einen Permanentmagneten (24), als Betätigungselement eine mit diesem zusammenwirkende Haftplatte (5) und einen schaltbaren Elektromagneten aufweist, wobei der Permanentmagnet (24) das Entriegelungssystem bei unbestromtem Elektromagneten in der Verriegelungsstellung hält, und der Elektromagnet so ausgelegt ist, dass bei bestromtem Elektromagneten das Magnetfeld des Permanentmagneten (24) so abgeschwächt ist, dass die Haftplatte (5) mittels des Kraftspeichers in eine Lage verstellbar ist in der die Sicherheitsvorrichtung entriegelt ist, **dadurch gekennzeichnet, dass** das Spannen des Kraftspeichers während des Entriegelungsvorganges erfolgt.

2. Entriegelungssystem nach Anspruch 1, **dadurch gekennzeichnet, dass** der Kraftspeicher eine Feder (25) ist.

3. Entriegelungssystem nach einem der Ansprüche 1 oder 2, **dadurch gekennzeichnet, dass** der Kraftspeicher zwischen einem Gehäuseteil und dem Betätigungselement angeordnet ist.

4. Entriegelungssystem nach einem der Ansprüche 1 bis 3, **dadurch gekennzeichnet, dass** das Übersetzungsgetriebe aus mehreren Klinken und Hebeln besteht, wobei mindestens eine Betätigungsklinke (7) vorgesehen ist, auf die das Betätigungselement einwirkt, sowie mindestens eine Sperrklinke (9), die mit dem Halteglied (6) zusammenwirkt und mindestens ein Zwischenhebel (8), der mit der Betätigungsklinke (7) und der Sperrklinke (9) zusammenwirkt.

5. Entriegelungssystem nach einem der Ansprüche 1 bis 4, **dadurch gekennzeichnet, dass** zum Spannen des Kraftspeichers ein zusätzliches Teil (13) angeordnet ist, das durch einen Bestandteil des Übersetzungsgetriebes bei der Bewegung von Getriebegliedern aus der Sperrposition in die Auslöseposition die Haftplatte (5) in die Verriegelungsposition entgegen der Kraft des Kraftspeichers verstellt.

6. Entriegelungssystem nach einem der Ansprüche 1 bis 5, **dadurch gekennzeichnet, dass** die Haftplatte (5) als Stößel ausgebildet ist oder einen Stößel umfasst.

7. Entriegelungssystem nach einem der Ansprüche 5 oder 6, **dadurch gekennzeichnet, dass** das zusätzliche Teil (13) ein federndes Teil ist, das eine größere Federkraft hat als der zu spannende Kraftspeicher.

8. Entriegelungssystem nach einem der Ansprüche 4 bis 7, **dadurch gekennzeichnet, dass** das zusätzliche Teil (13) an der Betätigungsklinke (7) ausgebildet, befestigt oder angeformt ist und bei der Bewegung aus der Sperrposition in die Auslöseposition durch den Zwischenhebel (8) betätigt ist.

9. Entriegelungssystem nach Anspruch 8, **dadurch gekennzeichnet, dass** die Sperrklinke (9) und der Zwischenhebel (8) ineinander greifende Nasen oder Vorsprünge aufweisen, so dass während der Bewegung aus der Sperrposition in die Auslöseposition von der Sperrklinke (9) ein Drehmoment auf den Zwischenhebel (8) übertragen wird.

10. Entriegelungssystem nach einem der Ansprüche 5 bis 7, **dadurch gekennzeichnet, dass** das zusätzliche Teil (13) an einem Gehäuseteil parallel zur Stellrichtung der Haftplatte (5) verschieblich gehalten ist und sich mit einem ersten Endbereich an der Haftplatte (5) abstützt, wobei ein zweiter Endbereich sich an einem Bestandteil der Sperrklinke (9) abstützt, so dass das Teil bei der Bewegung der Sperrklinke (9) aus der Sperrposition in die Auslöseposition in Richtung zur Haftplatte (5) verschoben wird und die Haftplatte (5) in die Verriegelungsposition verstellt.

11. Entriegelungssystem nach Anspruch 10, **dadurch gekennzeichnet, dass** der zweite Endbereich ein Federschenkel (17) ist, der an das verschiebliche Teil (18) angeschlossen ist und mit seinem freien, abgewinkelten Ende gehäuseseitig fixiert ist.

12. Entriegelungssystem nach einem der Ansprüche 4 bis 11, **dadurch gekennzeichnet, dass** die Betätigungsklinke (7) mit einem dem Zwischenhebel (8) abgewandten Hebelarm an der Haftplatte (5) abgestützt ist, wobei der Hebelarm mittels einer sich an Gehäuseteilen abstützenden Feder (19) gegen die Haftplatte (5) angedrückt ist.

13. Entriegelungssystem nach einem der Ansprüche 4 bis 12, **dadurch gekennzeichnet, dass** das Gehäuse (31), welches die Funktionselemente umgibt, mindestens eine Durchgriffslochung (30) für ein Werkzeug aufweist, die im Bereich der Betätigungsklinke (7) vorgesehen ist.

14. Entriegelungssystem nach Anspruch 13, **dadurch gekennzeichnet, dass** die Durchgriffslochung (30) oder eine erste Durchgriffslochung einen Eingriffsbereich (29) unterhalb der Betätigungsklinke (7) bildet, und die Durchgriffslochung (30) oder eine zweite Durchgriffslochung einen Eingriffsbereich (28) oberhalb der Betätigungsklinke (7) bildet.

15. Entriegelungssystem nach Anspruch 14, **dadurch gekennzeichnet, dass** die erste Durchgriffslochung (30) einen Eingriffsbereich (29) zwischen dem an der Haftplatte (5) anliegenden Hebelarm der Betätigungsklinke (7) und der Haftplatte (5) bildet.

16. Entriegelungssystem nach einem der Ansprüche 14 oder 15, **dadurch gekennzeichnet, dass** die zweite Durchgriffslochung (30) einen Eingriffsbereich (28) bildet, der zu der der Haftplatte (5) abgewandten Seite des Hebelarms der Betätigungsklinke (7) führt.

## Claims

1. A reversible unlocking system for triggering a safety device in motor vehicles having a housing, comprising an actuator (2), which is prestressed by means of an energy store and, in the case of activation, activates an energy-store operating element which keeps itself in the locked state, wherein a displacement movement of the operating element, via a transmission gear mechanism, causes a detent (9) to be moved out of its blocking position into a triggering position, and the movement of the detent (9) causes a retaining member (6) of the safety device to be released from the locking position and freed, wherein furthermore, once unlocking has taken place, it is possible for the unlocking arrangement to be reversed into the locking position by the operating element being adjusted, counter to the force of the energy store, into its stressed position and by the detent (9) being displaced, with the retaining member (6), into the locking position, wherein the actuator (2) has a permanent magnet (24) and also, as operating element, a clamping plate, which interacts with the permanent magnet, and also a switchable electromagnet, wherein the permanent magnet (24) keeps the unlocking system in the locking position when the electromagnet is in the de-energized state, and the electromagnet is designed such that, when the electromagnet is in the energized state, the magnetic field of the permanent magnet (24) is weakened such that the clamping plate (5) can be adjusted, by means of the energy store, into a position in which the safety device is unlocked, **characterized in that** the energy store is subject to stressing action during the unlocking operation.

2. The unlocking system as claimed in claim 1, **characterized in that** the energy store is a spring (25).

3. The unlocking system as claimed in either of claims 1 and 2, **characterized in that** the energy store is arranged between a housing part and the operating element.

4. The unlocking system as claimed in one of claims 1 to 3, **characterized in that** the transmission gear mechanism comprises a plurality of catches and levers, including at least one operating catch (7), on which the operating element acts, and at least one detent (9), which interacts with the retaining member (6), and at least one intermediate lever (8), which interacts with the operating catch (7) and the detent (9).

5. The unlocking system as claimed in one of claims 1 to 4, **characterized in that** an additional part (13) is provided for the purpose of stressing the energy store, and this additional part (13), by way of a constituent part of the transmission gear mechanism upon movement of gear-mechanism members out of the blocking position into the triggering position, adjusts the clamping plate (5) into the locking position counter to the force of the energy store.

6. The unlocking system as claimed in one of claims 1 to 5, **characterized in that** the clamping plate (5) is designed as a tappet or comprises a tappet.

7. The unlocking system as claimed in either of claims 5 and 6, **characterized in that** the additional part (13) is a resilient part which has greater resilient force than the energy store which is to be subjected to stressing.

8. The unlocking system as claimed in one of claims 4 to 7, **characterized in that** the additional part (13) is formed, fastened or molded on the operating catch (7) and, upon movement out of the blocking position into the triggering position, is operated by the intermediate lever (8).

9. The unlocking system as claimed in claim 8, **characterized in that** the detent (9) and the intermediate lever (8) have interengaging noses or protrusions, and therefore, during movement out of the blocking position into the triggering position, a torque is transmitted to the intermediate lever (8) from the detent (9).

10. The unlocking system as claimed in one of claims 5 to 7, **characterized in that** the additional part (13) is retained on a housing part such that it can be displaced parallel to the movement direction of the clamping plate (5), and it has a first end region supported on the clamping plate (5), wherein a second end region is supported on a constituent part of the detent (9), and therefore, upon movement of the detent (9) out of the blocking position into the triggering position, the part (13) is displaced in the direction of the clamping plate (5) and adjusts the clamping plate (5) into the locking position.

11. The unlocking system as claimed in claim 10, **characterized in that** the second end region is a resilient leg (17) which is connected to the displaceable part (18) and has its free, angled end fixed to the housing.

12. The unlocking system as claimed in one of claims 4 to 11, **characterized in that** the operating catch (7) is supported on the clamping plate (5) by way of a lever arm which is directed away from the intermediate lever (8), wherein the lever arm is pressed against the clamping plate (5) by means of a spring (19) supported on housing parts.

13. The unlocking system as claimed in one of claims 4 to 12, **characterized in that** the housing (31), which encloses the functional elements, has at least one through-passage hole (30) for a tool, this hole being provided within the region of the operating catch (7).

14. The unlocking system as claimed in claim 13, **characterized in that** the through-passage hole (30) or a first through-passage hole forms an engagement region (29) beneath the operating catch (7), and the through-passage hole (30) or a second through-passage hole forms an engagement region (28) above the operating catch (7).

15. The unlocking system as claimed in claim 14, **characterized in that** the first through-passage hole (30) forms an engagement region (29) between the clamping plate (5) and that lever arm of the operating catch (7) which butts against the clamping plate (5).

16. The unlocking system as claimed in either of claims 14 and 15, **characterized in that** the second through-passage hole (30) forms an engagement region (28) which leads to that side of the lever arm of the operating catch (7) which is directed away from the clamping plate (5).

## Revendications

1. Système de déverrouillage réversible pour le déclenchement d'un dispositif de sécurité dans des véhicules automobiles, avec un boîtier, comprenant un actionneur (2) précontraint au moyen d'un accumulateur de force, qui, dans le cas d'une activation, active un élément d'actionnement d'un accumulateur de force disposé dans l'état de verrouillage en mode d'autoblocage, un cliquet d'arrêt (9) pouvant être déplacé de sa position de blocage dans une position de déclenchement par un mouvement de levage de l'élément d'actionnement par le biais d'un démultiplicateur, et un organe de retenue (6) du dispositif de sécurité étant desserré et libéré de la position de verrouillage par le déplacement du cliquet d'arrêt (9), l'inversion du dispositif de déverrouillage dans la position de verrouillage étant en outre possible après le déverrouillage, en déplaçant l'élément d'actionnement à l'encontre de la force de l'accumulateur de force dans sa position serrée et en déplaçant le cliquet d'arrêt (9) avec l'organe de retenue (6) dans la position de verrouillage, l'actionneur (2) présentant un aimant permanent (24), en tant qu'élément d'actionnement une plaque d'adhérence (5) coopérant avec celui-ci, et un électroaimant commutable, l'aimant permanent (24) retenant le système de déverrouillage dans la position de verrouillage lorsque l'électroaimant n'est pas alimenté en courant, et l'électroaimant étant conçu de telle sorte que lorsque l'électroaimant est parcouru par un courant, le champ magnétique de l'aimant permanent (24) soit affaibli dans une telle mesure que la plaque d'adhérence (5) puisse être déplacée au moyen de l'accumulateur de force dans une position dans laquelle le dispositif de sécurité est déverrouillé, **caractérisé en ce que** le serrage de l'accumulateur de force a lieu pendant l'opération de déverrouillage.

2. Système de déverrouillage selon la revendication 1, **caractérisé en ce que** l'accumulateur de force est un ressort (25).

3. Système de déverrouillage selon l'une quelconque des revendications 1 ou 2, **caractérisé en ce que** l'accumulateur de force est disposé entre une partie de boîtier et l'élément d'actionnement.

4. Système de déverrouillage selon l'une quelconque des revendications 1 à 3, **caractérisé en ce que** le démultiplicateur se compose de plusieurs cliquets et leviers, au moins un cliquet d'actionnement (7) étant prévu, sur lequel agit l'élément d'actionnement, ainsi qu'au moins un cliquet d'arrêt (9), qui coopère avec l'organe de retenue (6) et au moins un levier intermédiaire (8), qui coopère avec le cliquet d'actionnement (7) et le cliquet d'arrêt (9).

5. Système de déverrouillage selon l'une quelconque des revendications 1 à 4, **caractérisé en ce que** pour serrer l'accumulateur de force, on utilise une pièce supplémentaire (13) qui déplace la plaque d'adhérence (5) dans la position de verrouillage à l'encontre de la force de l'accumulateur de force au moyen d'un composant du démultiplicateur lors du déplacement d'organes de transmission de la position de blocage dans la position de déclenchement.

6. Système de déverrouillage selon l'une quelconque des revendications 1 à 5, **caractérisé en ce que** la plaque d'adhérence (5) est réalisée sous forme de poussoir ou comprend un poussoir.

7. Système de déverrouillage selon l'une quelconque des revendications 5 ou 6, **caractérisé en ce que** la pièce supplémentaire (13) est un ressort élastique qui a une plus grande force de ressort que l'accumulateur de force à serrer.

8. Système de déverrouillage selon l'une quelconque des revendications 4 à 7, **caractérisé en ce que** la pièce supplémentaire (13) est réalisée, fixée ou façonnée sur le cliquet d'actionnement (7), et dans le cas du déplacement hors de la position de blocage dans la position de déclenchement, est actionnée par le levier intermédiaire (8).

9. Système de déverrouillage selon la revendication 8, **caractérisé en ce que** le cliquet d'arrêt (9) et le levier intermédiaire (8) présentent des nez ou des saillies venant en prise les uns dans les autres, de sorte que pendant le déplacement de la position de blocage dans la position de déclenchement du cliquet d'arrêt (9), un couple soit transmis au levier intermédiaire (8).

10. Système de déverrouillage selon l'une quelconque des revendications 5 à 7, **caractérisé en ce que** la pièce supplémentaire (13) est maintenue de manière déplaçable parallèlement à la direction de réglage de la plaque d'adhérence (5) sur une partie du boîtier, et s'appuie avec une première région d'extrémité sur la plaque d'adhérence (5), une deuxième région d'extrémité s'appuyant sur un composant du cliquet d'arrêt (9), de sorte que la pièce, lors du déplacement du cliquet d'arrêt (9) de la position de blocage dans la position de déclenchement, soit déplacée dans la direction de la plaque d'adhérence (5) et que la plaque d'adhérence (5) soit déplacée dans la position de verrouillage.

11. Système de déverrouillage selon la revendication 10, **caractérisé en ce que** la deuxième région d'extrémité est une branche de ressort (17) qui est raccordée à la partie déplaçable (18) et qui est fixée du côté du boîtier par son extrémité libre coudée.

12. Système de déverrouillage selon l'une quelconque des revendications 4 à 11, **caractérisé en ce que** le cliquet d'actionnement (7) est supporté sur la plaque d'adhérence (5) avec un bras de levier opposé au levier intermédiaire (8), le bras de levier étant pressé contre la plaque d'adhérence (5) au moyen d'un ressort (19) s'appuyant sur des parties du boîtier.

13. Système de déverrouillage selon l'une quelconque des revendications 4 à 12, **caractérisé en ce que** le boîtier (31), qui entoure les éléments fonctionnels, présente au moins un perçage d'accès (30) pour un outil, qui est prévu dans la région du cliquet d'actionnement (7).

14. Système de déverrouillage selon la revendication 13, **caractérisé en ce que** le perçage d'accès (30) ou un premier perçage d'accès forme une région d'engagement (29) sous le cliquet d'actionnement (7) et le perçage d'accès (30) ou un deuxième perçage d'accès forme une région d'engagement (28) au-dessus du cliquet d'actionnement (7).

15. Système de déverrouillage selon la revendication 14, **caractérisé en ce que** le premier perçage d'accès (30) forme une région d'engagement (29) entre le bras de levier du cliquet d'actionnement (7) s'appliquant contre la plaque d'adhérence (5) et la plaque d'adhérence (5).

16. Système de déverrouillage selon l'une quelconque des revendications 14 ou 15, **caractérisé en ce que** le deuxième perçage d'accès (30) forme une région d'engagement (28) qui conduit au côté du bras de levier du cliquet d'actionnement (7) opposé à la plaque d'adhérence (5).
